# EUROPÄISCHE PATENTANMELDUNG

(11) **EP 1 666 280 A1**
(43) Veröffentlichungstag der Anmeldung: **07.06.2006**
(21) Anmeldenummer: 05024480.5
(22) Anmeldetag: 10.11.2005
(51) Int. Cl.: B60D 1/01, B60T 8/17, B60R 9/10

(54) **Verfahren und Vorrichtung zum Unterscheiden eines Anhängers von einer Trägereinrichtung am Heck eines Fahrzeugs**

(30) Priorität: 26.11.2004 DE 102004057220
(71) Anmelder: AUDI AG, 85045 Ingolstadt (DE)
(72) Erfinder: Jablonowski, Carsten, 85110 Schelldorf (DE); Müller, Thomas, 80939 München (DE)
(74) Vertreter: Patzelt, Heike Anna Maria

(57) **Zusammenfassung**

Die Erfindung betrifft ein Verfahren, ein Computerprogramm und eine Vorrichtung zum Unterscheiden eines an einer Anhängerkupplung 210 eines Fahrzeugs 200 drehbar angekuppelten Anhängers 220 von einer an dem Heck des Fahrzeugs montierten Trägereinrichtung 230. Das Verfahren umfasst folgende Schritte: a) Prüfen, ob eine Anhängersteckdose 250 des Fahrzeugs belegt ist; b) Prüfen, ob in einem zumindest näherungsweise durch die Position der gegebenenfalls montierten Trägereinrichtung 230 begrenzten Entfernungsbereich von einem Referenzpunkt im Heckbereich des Fahrzeugs 200 ein Objekt vorhanden ist; und c) Feststellen, dass der Anhänger angekuppelt ist, wenn in Schritt a) eine Belegung der Anhängersteckdose 250 erkannt wird und wenn entweder in Schritt b) kein Objekt in dem Entfernungsbereich erkannt wird oder wenn in Schritt b) zwar zumindest zeitweise ein Objekt in dem Entfernungsbereich erkannt, aber in einem zusätzlichen Schritt d) festgestellt wird, dass sich der Abstand zwischen dem Objekt und dem Referenzpunkt bei einer Geschwindigkeit des Fahrzeugs größer Null nach Maßgabe des Lenkwinkels oder des Lenkradwinkels 200 ändert.

## Beschreibung

Die Erfindung betrifft eine Vorrichtung und ein Verfahren zum Unterscheiden eines an eine Anhängerkupplung eines Fahrzeugs angekuppelten Anhängers von einer am Heck des Fahrzeugs montierten Trägereinrichtung, insbesondere Fahrradträger. Darüber hinaus betrifft die Erfindung ein Computerprogramm zum Durchführen des besagten Verfahrens.

Hintergrund der vorliegenden Erfindung ist das Problem einer Anhänger- oder Gespannstabilisierung, wobei unter dem Begriff Gespann ein Fahrzeug mit einer Anhängerkupplung zu verstehen ist, an welcher ein Anhänger drehbar angekuppelt ist. Die Gespannstabilisierung ist heutzutage typischerweise als Teilfunktion in ein elektrisches Stabilitätsprogramm ESP eines Fahrzeugs integriert. Zu der Problematik des Erkennens eines schwingenden Gespanns gibt es zahlreichen Stand der Technik, so zum Beispiel veröffentlicht in den Patentanmeldungen WO 2004/041612, W02004/041613 und W02004/04614 oder in der Europäischen Patentschrift EP 0 941 905 B1. Gemäß den Lehren der genannten Druckschriften wird das Gespann und insbesondere das Fahrzeug im Hinblick auf Schlingerbewegungen überwacht, welche typischerweise mithilfe eines Gierratensensors detektiert werden.

Ungeachtet der technischen Lehren der genannten Druckschriften, ist es im Stand der Technik üblich, die Funktion der Gespannstabilisierung überhaupt nur dann freizugeben und zu aktivieren, wenn auch tatsächlich ein Gespann und nicht lediglich ein einzelnes Fahrzeug in eine kritische Fahrsituation gerät. Um festzustellen, ob tatsächlich ein Gespann und nicht lediglich ein einzelnes Fahrzeug ohne angekuppelten Anhänger vorhanden ist, wird im Stand der Technik die Gespannstabilisierungsfunktion nur dann freigegeben, wenn eine Anhängersteckdose des Fahrzeugs belegt ist. In diesem Fall wird traditionell davon ausgegangen, dass an die Anhängerkupplung des Fahrzeugs ein Anhänger angekuppelt ist.

Diese traditionell getroffene Annahme ist jedoch nicht zwingend notwendig korrekt. Anstelle eines drehbar angekuppelten Anhängers kann auch lediglich eine Trägereinrichtung, zum Beispiel ein Fahrradträger nicht-drehbar am Heck des Fahrzeugs montiert sein. Auch eine derartige Trägereinrichtung kann - genau wie ein Anhänger - Rückleuchten oder Bremsleuchten und zum Betrieb dieser Leuchten ein Kabel aufweisen, welches in die Anhängersteckdose des Fahrzeugs eingesteckt wird. In diesem Fall wäre der Rückschluss von der Belegung der Anhängersteckdose auf das Vorhandensein eines drehbar an die Anhängerkupplung gekuppelten Anhängers nicht richtig; eine an diesen Rückschluss gekoppelte Freigabe der Gespannstabilisierungsfunktion hätte möglicherweise fatale unerwünschte Konsequenzen. So könnte eine Aktivierung der Gespannstabilisierungsfunktion in diesem Fall eine Beeinflussung des aktuellen Fahrverhaltens des Fahrzeugs hervorrufen, welche weitaus heftiger ausfallen würde, als dies eigentlich erforderlich wäre, was zu einer unnötigen Gefährdung des Straßenverkehrs führen könnte.

Ausgehend von diesem Stand der Technik liegt der Erfindung deshalb die Aufgabe zugrunde, ein Verfahren und eine Vorrichtung zum Unterscheiden eines an einer Anhängerkupplung eines Fahrzeugs drehbar angekuppelten Anhängers von einer fest am Heck des Fahrzeugs montierten Trägereinrichtung bereitzustellen.

Diese Aufgabe wird durch das in Patentanspruch 1 beanspruchte Verfahren gelöst. Dieses Verfahren umfasst folgende Schritte: a) Prüfen, ob eine Anhängersteckdose des Fahrzeugs belegt ist; b) Prüfen, ob in einem zumindest näherungsweise durch die Position der gegebenenfalls montierten Trägereinrichtung begrenzten Entfernungsbereich von einem Referenzpunkt im Heckbereich des Fahrzeugs ein Objekt vorhanden ist; und c) Feststellen, dass der Anhänger angekuppelt ist, wenn in Schritt a) eine Belegung der Anhängersteckdose erkannt wird und wenn entweder in Schritt b) kein Objekt in dem Entfernungsbereich erkannt wird oder wenn in Schritt b) zwar ein Objekt in dem Entfernungsbereich erkannt, aber in einem zusätzlichem Schritt d) festgestellt wird, dass sich der Abstand zwischen dem Objekt und dem Referenzpunkt bei einer Geschwindigkeit des Fahrzeugs größer Null nach Maßgabe des Lenkwinkels oder des Lenkradwinkels des Fahrzeugs ändert.

Vorteilhafterweise ermöglicht das erfindungsgemäße Verfahren eine Unterscheidung zwischen dem Anhänger und der Trägereinrichtung dadurch, dass neben der Prüfung der Belegung der Anhängersteckdose auch geprüft wird, ob in einer Entfernung, in welcher die Trägereinrichtung typischerweise vom Heckbereich des Fahrzeugs entfernt montiert ist, sich ein Objekt befindet oder nicht. Wenn dies nicht der Fall sein sollte, aber die Anhängersteckdose trotzdem belegt ist, wird daraus geschlossen, dass der typischerweise über eine Deichsel drehbar an die Anhängerkupplung angekuppelte Anhänger vorhanden ist, welcher typischerweise einen größeren Abstand zum Heck des Fahrzeugs aufweist als die Trägereinrichtung.

Alternativ dazu wird das Vorhandensein eines angekuppelten Anhängers auch dann angenommen, wenn die Belegung der Anhängersteckdose erkannt wird und wenn zwar zumindest zeitweise ein Objekt in dem Entfernungsbereich erkannt, aber gleichzeitig festgestellt wird, dass sich der Abstand dieses Objektes zu dem Referenzpunkt im Heckbereich des Fahrzeugs bei einer Geschwindigkeit des Fahrzeugs größer Null in Abhängigkeit des Lenkwinkels oder Lenkradwinkels ändert. Gemäß Patentanspruch 1 wird bei der genannten Alternative das Vorliegen der beiden Kriterien, d. h. die Belegung der Anhängerkupplung und die Veränderung des Abstandes zwischen dem Objekt und dem Referenzpunkt mit der Zeit als sicheres Indiz für das Vorhandensein eines drehbar angekuppelten Anhängers an dem Fahrzeug gewertet.

Die oben genannte Aufgabe wird weiterhin durch das in Patentanspruch 2 beanspruchte Verfahren gelöst. Dieses unterscheidet sich von dem in Patentanspruch 1 beanspruchten alternativen Verfahren dadurch, dass die Ankupplung des Anhängers an das Fahrzeug ohne Auswertung der Belegung der Anhängersteckdose, sondern alleine auf der Basis einer festgestellten Änderung des Abstandes zwischen dem Objekt in dem Entfernungsbereich und dem Referenzpunkt bei einer Geschwindigkeit des Fahrzeugs größer Null in Abhängigkeit des Lenkwinkels bzw. des Lenkradwinkels erkannt wird.

Alle drei beanspruchten Verfahren, d. h. sowohl die beiden alternativen Verfahren gemäß Patentanspruch 1 wie auch das Verfahren gemäß Patentanspruch 2 ermöglichen eine eindeutige Feststellung darüber, ob der drehbar gelagerte Anhänger an der Anhängerkupplung angekuppelt ist oder nicht. Es ist vorteilhaft, dass eine Gespannstabilisierungsfunktion vorzugsweise für ein elektronisches Stabilitätsprogramm des Fahrzeugs lediglich dann freigegeben und aktiviert wird, wenn der Anhänger gemäß einem der drei beanspruchten Verfahren erkannt wird.

Alternativ zum Erkennen des Anhängers ermöglichen die beanspruchten Verfahren jeweils eine Erkennung der am Heck des Fahrzeugs montierten Trägereinrichtung, wenn festgestellt wird, dass der Abstand zwischen dem Objekt und dem Referenzpunkt am Heck des Fahrzeugs bei einer Geschwindigkeit des Fahrzeugs größer Null unabhängig vom Lenkwinkel bzw. Lenkradwinkel des Fahrzeugs konstant bleibt.

Die oben genannte Aufgabe der Erfindung wird weiterhin durch ein Computerprogramm und eine Vorrichtung zum Durchführen der beanspruchten Verfahren gelöst. Die Vorteile dieser Lösungen entsprechen den oben mit Bezug auf die beanspruchten Verfahren genannten Vorteilen.

Darüber hinaus ist es vorteilhaft, wenn bei der Vorrichtung Ultraschallsensoren als Abstandsmesseinrichtung verwendet werden. Vorteilhafterweise werden bereits ohnehin in dem Fahrzeug vorhandene Ultraschallsensoren, die bisher nur als Einparkhilfen verwendet wurden, auch für die beanspruchte Vorrichtung verwendet.

Der Beschreibung sind insgesamt 3 Figuren beigefügt, wobei
- Figur 1: ein Fahrzeug mit einem angekuppelten Anhänger bzw. mit einer am Heck montierten Trägereinrichtung;
- Figur 2: die erfindungsgemäße Vorrichtung; und
- Figur 3: das erfindungsgemäße Verfahren
veranschaulicht.

Die Erfindung wird nachfolgend unter Bezugnahme auf die genannten Figuren anhand von Ausführungsbeispielen detailliert beschrieben.

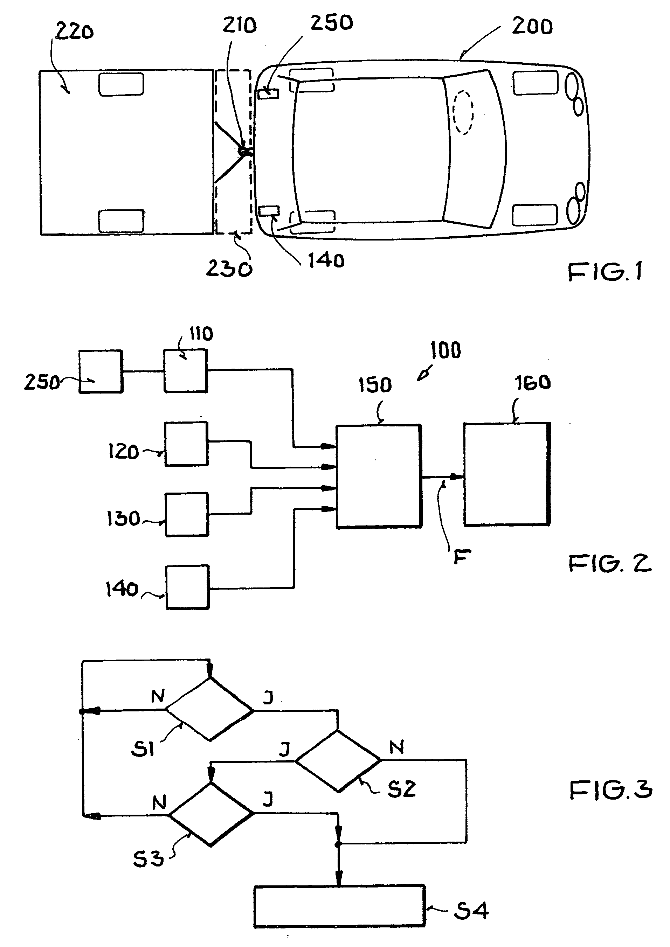

Figur 1 zeigt ein Fahrzeug 200 mit einer Anhängerkupplung 210. An dieser Anhängerkupplung angekuppelt ist ein Anhänger 220. Alternativ zu dem Anhänger 220 kann eine Trägereinrichtung 230, zum Beispiel ein Fahrradträger, am Heck des Fahrzeugs montiert sein. Die Trägereinrichtung kann auch auf die Anhängerkupplung 210 aufgesetzt sein; sie ist dann jedoch nicht drehbar auf der Anhängerkupplung 210 gelagert.

Sowohl der Anhänger 220 wie auch die Trägereinrichtung 230 können Rückleuchten und/oder Bremsleuchten (nicht gezeigt) aufweisen. Zur Versorgung dieser Leuchten mit elektrischer Energie aus einem Bordnetz bzw. einer Batterie des Fahrzeugs 200 sind diese Leuchten über ein Kabel (nicht gezeigt) an die Anhängersteckdose 250 des Fahrzeugs 200 angeschlossen.

Figur 2 veranschaulicht die erfindungsgemäße Vorrichtung 100 für ein Fahrzeug 200 zum Unterscheiden, ob der Anhänger 220 oder die Trägereinrichtung 230 oder weder der Anhänger noch die Trägereinrichtung 230 am Heck des Fahrzeugs 200 angekuppelt bzw. montiert sind.

Zu diesem Zweck umfasst die Vorrichtung 100 eine mit der Anhängersteckdose 250 verbundene elektrische Messeinrichtung 110 zum Prüfen bzw. Feststellen, ob die Anhängersteckdose 250 belegt ist oder nicht. Im einfachsten Fall kann die elektrische Messeinrichtung 110 zum Beispiel als Messwiderstand (Shunt) ausgebildet sein.

Weiterhin umfasst die Vorrichtung 100 eine Geschwindigkeitsmesseinrichtung 120 zum Erfassen der Geschwindigkeit des Fahrzeugs 200, eine Lenkwinkel- oder eine Lenkradwinkelmesseinrichtung 130 zum Erfassen des jeweils aktuellen Lenkwinkels oder Lenkradwinkels des Fahrzeugs 200 sowie eine Abstandsmesseinrichtung 140, welche vorzugsweise als Einparkhilfe in Form eines Ultraschallsensors ausgebildet und im Heckbereich des Fahrzeugs, zum Beispiel in der hinteren Stoßstange des Fahrzeugs, montiert ist. Die Abstandsmesseinrichtung 140 ist ausgebildet zum Prüfen bzw. Feststellen, ob in einer ungefähren Entfernung, in welcher gegebenenfalls die Trägereinrichtung von der Abstandsmesseinrichtung 140 als Referenzpunkt entfernt positioniert ist, ein Objekt vorhanden ist oder nicht.

Alle genannten Messeinrichtungen 110, 120, 130, 140 generieren ihrerseits Messsignale, welche von einem Logikmodul 150 der Vorrichtung 100 empfangen und entsprechend einem nachfolgend beschriebenen erfindungsgemäßen Verfahren im Hinblick auf das Vorhandensein des Anhängers 220 oder der Trägereinrichtung 230 am Heck des Fahrzeugs 200 ausgewertet werden.

In dem Logikmodul 150 wird ein Freigabesignal F generiert und an ein elektronisches Stabilitätsprogramm (ESP)-Steuergerät 160 ausgegeben. Das Freigabesignal F dient dazu, eine Gespannstabilisierungsfunktion in dem Steuergerät 160 nur dann freizugeben und zu aktivieren, wenn das Logikmodul nach Durchführung des erfindungsgemäßen Verfahrens einen an das Fahrzeug 200 angekuppelten Anhänger 220 erkannt hat; in allen anderen Fällen wird die Gespannstabilisierungsfunktion über das Freigabesignal F gesperrt. Das Logikmodul 150 kann in das ESP-Steuergerät 160 integriert sein.

Das erfindungsgemäße Verfahren zum Unterscheiden des angekuppelten Anhängers 220 von der Trägereinrichtung 230 wird nachfolgend in Form von drei Ausführungsbeispielen beschrieben, wobei ein erstes und ein zweites Ausführungsbeispiel in Fig. 3 veranschaulicht sind.

Das Verfahren sieht gemäß dem ersten und zweiten Ausführungsbeispiel in einem ersten Schritt S1 gemäß Fig. 3 zunächst vor, dass mit Hilfe der elektrischen Messeinrichtung 110 geprüft wird, ob die Anhängersteckdose 250 des Fahrzeugs 200 belegt ist oder nicht. Wenn keine Belegung der Anhängersteckdose festgestellt wird, wird davon ausgegangen, dass weder der Anhänger 220 angekuppelt noch die Trägereinrichtung 230 montiert ist; das Verfahren kehrt dann auf den Schritt S1 zurück und wartet so lange, bis eine Belegung der Anhängersteckdose 250 festgestellt wird.

Bei Feststellung einer Belegung der Anhängersteckdose 250 verzweigen das erste und das zweite Ausführungsbeispiel des Verfahrens zu einem Verfahrenschritt S2 in welchem mit Hilfe der Abstandsmesseinrichtung 140 festgestellt wird, ob in einer vorbestimmten Entfernung von dem Einbauort der Abstandsmesseinrichtung 140 als Referenzpunkt ein Objekt vorhanden ist oder nicht. Die vorbestimmte Entfernung entspricht dabei im Wesentlichen der Entfernung der gegebenenfalls montierten Trägereinrichtung 230 von dem Referenzpunkt. Wenn in dem genannten Entfernungsbereich kein Objekt detektiert wird, aber bereits im Verfahrensschritt S1 eine Belegung der Anhängersteckdose festgestellt wurde, dann wird gemäß dem ersten Ausführungsbeispiel darauf geschlossen, dass dennoch ein Objekt in Form des Anhängers vorhanden ist, allerdings in einer größeren als der vorgegebenen Entfernung von dem Referenzpunkt. Bei dem Objekt handelt es sich dann zwangsläufig um den typischerweise über eine Deichsel an die Anhängerkupplung 210 angekuppelten Anhänger. Weil in dem vorgegebenen bzw. begrenzten Entfernungsbereich kein Objekt erkannt wurde, kann das Vorhandensein der Trägereinrichtung 230 in diesem Fall ausgeschlossen werden.

Anders ist die Situation, wenn durch ein Zusammenwirken der Abstandsmesseinrichtung 140 und des Logikmoduls 150 ein Objekt in dem zuvor beschriebenen Entfernungsbereich erkannt wird. Die Belegung der Anhängersteckdose 250, wie sie in dem Verfahrensschritt S1 festgestellt wurde, und das Erkennen eines Objektes innerhalb des vorgegebenen Entfernungsbereiches gemäß Verfahrensschritt S2 lässt dann gemäß dem zweiten Ausführungsbeispiel auf das Vorhandensein entweder des Anhängers 220 oder der Trägereinrichtung 230 schließen. Um jedoch die gewünschte Unterscheidung herbeiführen zu können, d. h. um eindeutig sagen zu können, ob der Anhänger oder die Trägereinrichtung 230 im Heckbereich des Fahrzeugs vorhanden ist, werden in einem Verfahrenschritt S3 gemäß dem zweiten Ausführungsbeispiel nachfolgend die Messsignale der Abstandsmesseinrichtung 140, der Geschwindigkeitsmesseinrichtung 120 und der Lenkwinkel- bzw. Lenkradwinkelmesseinrichtung 130 in besonderer Weise durch das Logikmodul 150 ausgewertet. Genauer gesagt, prüft das Logikmodul, ob sich der Abstand zwischen dem erkannten Objekt und dem Referenzpunkt bei einer Geschwindigkeit des Fahrzeugs 200 größer Null in Abhängigkeit des Lenkwinkels oder des Lenkradwinkels ändert oder nicht. Wenn das Logikmodul 150 eine derartige Beziehung oder Korrelation zwischen dem Abstand und dem Lenkwinkel feststellt, wird das erkannte Objekt als Anhänger interpretiert und eindeutig auf das Vorhandensein des angekuppelten Anhängers geschlossen. Das Fahrzeug fungiert dann als Zugfahrzeug und bildet zusammen mit dem Anhänger ein Gespann, genau wie bei dem ersten Ausführungsbeispiel. Bei beiden Ausführungsbeispielen generiert das Logikmodul 150 bei Erkennen des Gespanns das Freigabesignal F zum Freigeben der Gespannstabilisierungsfunktion in dem ESP-Steuergerät 160.

Anderenfalls, wenn in dem zweiten Ausführungsbeispiel in Verfahrenschritt S3 festgestellt wird, dass der Abstand unabhängig vom Lenkwinkel ist, wird daraus geschlossen, dass nicht der Anhänger 220, sondern die Trägereinrichtung 230 am Heck des Fahrzeugs vorhanden ist. Das Verfahren verzweigt dann gemäß seinem zweiten Ausführungsbeispiel wieder zurück auf Verfahrensschritt S1 und wartet dort so lange, bis eine erneute Belegung der Anhängerkupplung erkannt wird.

Ein drittes Ausführungsbeispiel des erfindungsgemäßen Verfahrens, welches in Figur 3 nicht gezeigt ist, entspricht im Wesentlichen dem zweiten Ausführungsbeispiel, wobei allerdings der erste Verfahrensschritt, dass heißt die Prüfung, ob die Anhängersteckdose belegt ist oder nicht, wegfällt. Die Abstandsmesseinrichtung 140 prüft zunächst in Verfahrensschritt S2, ob ein Objekt in dem durch die Trägereinrichtung 230 repräsentierten Entfernungsbereich detektiert wird. In diesem Fall wird weiterhin gemäß Verfahrenschritt S3 geprüft, ob bei einer Geschwindigkeit des Fahrzeugs 200 größer Null der Abstand der Trägereinrichtung 230 von der Abstandsmesseinrichtung 140 auch bei sich änderndem Lenkwinkel zeitlich konstant bleibt. Wenn die beiden Prüfungen gemäß der Verfahrensschritte S2 und S3 bejaht werden, wird gemäß dem dritten Ausführungsbeispiel eindeutig auf das Vorhandensein der Trägereinrichtung 230 als erkanntem Objekt zurückgeschlossen. Andernfalls, wenn in Verfahrensschritt S3 eine Abhängigkeit des Abstandes vom Lenkwinkel bzw. Lenkradwinkel festgestellt wird, kann gemäß dem dritten Ausführungsbeispiel auch ohne eine Überprüfung der Belegung der Anhängersteckdose auf den angekuppelten Anhänger und damit auf das Vorhandensein eines Gespanns geschlossen werden. Auch das dritte Ausführungsbeispiel sieht bei Erkennen des Gespanns vorzugsweise die Freigabe der Gespannstabilisierungsfunktion in dem ESP-Steuergerät 160 vor.

Das erfindungsgemäße Verfahren bzw. das Logikmodul werden vorzugsweise in Form eines Computerprogramms realisiert, welches auf einer Recheneinheit, z. B. einem Mikroprozessor, abläuft.

## Patentansprüche

1. Verfahren zum Unterscheiden eines an eine Anhängerkupplung (210) eines Fahrzeugs (200) drehbar angekuppelten Anhängers (220) von einer am Heck des Fahrzeugs (200) montierten Trägereinrichtung (230), insbesondere Fahrradträger, umfassend die folgenden Schritte:
a) Prüfen, ob eine Anhängersteckdose (250) des Fahrzeugs (200) belegt ist;
b) Prüfen, ob in einem zumindest näherungsweise durch die Position der gegebenenfalls montierten Trägereinrichtung (230) begrenzten Entfernungsbereich von einem Referenzpunkt im Heckbereich des Fahrzeugs (200) ein Objekt vorhanden ist; und
c) Feststellen, dass der Anhänger (220) angekuppelt ist,
wenn in Schritt a) eine Belegung der Anhängersteckdose (250) erkannt wird; und
wenn entweder in Schritt b) kein Objekt in dem Entfernungsbereich erkannt wird oder
wenn in Schritt b) zumindest zeitweise ein Objekt in dem Entfernungsbereich erkannt, aber in einem zusätzlichen Schritt d) festgestellt wird, dass sich der Abstand zwischen dem Objekt und dem Referenzpunkt bei einer Geschwindigkeit des Fahrzeugs größer Null nach Maßgabe des Lenkwinkels- oder des Lenkradwinkels des Fahrzeugs (200) ändert.

2. Verfahren zum Unterscheiden eines an eine Anhängerkupplung (210) eines Fahrzeugs (200) drehbar angekuppelten Anhängers (220) von einer am Heck des Fahrzeugs montierten Trägereinrichtung (230), insbesondere einem Fahrradträger, umfassend die folgenden Schritte:
a) entfällt
b) Prüfen, ob in einem zumindest näherungsweise durch die Position der montierten Trägereinrichtung (230) begrenzten Entfernungsbereich von einem Referenzpunkt im Heckbereich des Fahrzeugs (200) ein Objekt vorhanden ist; und
c) Feststellen, dass der drehbar gelagerte Anhänger angekuppelt ist, wenn in Schritt b) zumindest zeitweise ein Objekt in dem Entfernungsbereich erkannt und in einem zusätzlichen Schritt d) festgestellt wird, dass sich der Abstand zwischen dem Objekt und dem Referenzpunkt bei einer Geschwindigkeit des Fahrzeugs größer Null nach Maßgabe des Lenkwinkels- oder Lenkradwinkels des Fahrzeugs (200) ändert.

3. Verfahren nach Anspruch 1 oder 2, **gekennzeichnet durch**:
Freigeben einer Gespann-Stabilisierungsfunktion, vorzugsweise für ein elektronisches Stabilitätsprogramm ESP des Fahrzeugs, wenn in Schritt c) der drehbar angekuppelte Anhänger erkannt wird.

4. Verfahren nach Anspruch 1 oder 2, **gekennzeichnet durch**:
Feststellen, dass die Trägereinrichtung (230) montiert ist, wenn in Schritt d) festgestellt wird, dass der Abstand zwischen dem Objekt und dem Referenzpunkt bei einer Geschwindigkeit des Fahrzeugs größer Null unabhängig vom Lenkwinkels des Fahrzeugs konstant bleibt.

5. Computerprogramm für ein Steuergerät eines Fahrzeugs, **dadurch gekennzeichnet, dass** das Computerprogramm ausgebildet ist zum Durchführen des Verfahrens nach einem der Ansprüche 1 bis 4, wenn es auf einer Rechenereinrichtung, zum Beispiel einem Mikroprozessor des Steuergeräts, abläuft.

6. Vorrichtung (100) für ein Fahrzeug (200) zum Unterscheiden eines an eine Anhängerkupplung (210) des Fahrzeugs drehbar angekuppelten Anhängers (220) von einer am Heck des Fahrzeugs montierter Trägereinrichtung , insbesondere Fahrradträger, umfassend:
eine elektrische Messeinrichtung (110) zum Prüfen, ob eine Anhängersteckdose (250) des Fahrzeugs (200) belegt ist;
eine Geschwindigkeitsmesseinrichtung (120) zum Erfassen der Geschwindigkeit des Fahrzeugs (200);
eine Lenkwinkel- oder Lenkradwinkelmesseinrichtung (120) zum Erfassen des jeweils aktuellen Lenkwinkels oder Lenkradwinkels des Fahrzeugs; und
mindestens eine Abstandsmesseinrichtung (140) im Heckbereich des Fahrzeugs (200) zum Prüfen, ob in einer näherungsweise durch die Position der montierten Trägereinrichtung begrenzten Entfernung zu einem durch den Einbauort der Abstandsmesseinrichtung definierten Referenzpunkt im Heckbereich des Fahrzeugs ein Objekt vorhanden ist; und
ein Logikmodul (150) zum Feststellen, dass der drehbar gelagerte Anhänger angekuppelt ist,
wenn die elektrische Messeinrichtung (110) eine Belegung der Anhängersteckdose erkennt; und
wenn entweder die Abstandsmesseinrichtung (140) kein Objekt in dem Entfernungsbereich erkennt ;oder
wenn die Abstandsmesseinrichtung (140) zwar zumindest zeitweise ein Objekt in dem Entfernungsbereich erkennt, aber das Logikmodul 150 zusätzlich feststellt, dass sich der Abstand zwischen dem Objekt und dem Referenzpunkt bei einer von der Geschwindigkeitsmesseinrichtung (120) ermittelten Geschwindigkeit des Fahrzeugs größer Null nach Maßgabe des von der Lenk(rad)winkelmesseinrichtung (130) erfassten Lenkwinkels des Fahrzeugs ändert.

7. Vorrichtung (100) für ein Fahrzeug (200) zum Unterscheiden eines an eine Anhängerkupplung des Fahrzeugs drehbar angekuppelten Anhängers von einer am Heck des Fahrzeugs montierten Trägereinrichtung (230), insbesondere einem Fahrradträger, umfassend:
eine Geschwindigkeitsmesseinrichtung (120) zum Messen der Geschwindigkeit des Fahrzeugs;
eine Lenkwinkel- oder Lenkradwinkelmesseinrichtung (130) zum Erfassen des jeweils aktuellen Lenkwinkels oder Lenkradwinkels des Fahrzeugs; und
mindestens eine Abstandsmesseinrichtung (140) im Heckbereich des Fahrzeugs zum Prüfen, ob in einem zumindest näherungsweise durch die Position der gegebenenfalls montierten Trägereinrichtung begrenzten und vorbestimmten Entfernungsbereich zu einem durch die Position der Abstandsmesseinrichtung definierten Referenzpunkt im Heckbereich des Fahrzeugs ein Objekt vorhanden ist; und
ein Logikmodul (150) zum Feststellen, dass der drehbar gelagerte Anhänger angekuppelt ist, wenn die Abstandsmesseinrichtung (140) zumindest zeitweise ein Objekt in dem Entfernungsbereich erkennt und das Logikmodul (150) zusätzlich feststellt, dass sich der Abstand zwischen dem Objekt und dem Referenzpunkt bei einer von der Geschwindigkeitsmesseinrichtung (120) ermittelten Geschwindigkeit des Fahrzeugs größer Null nach Maßgabe des von der Lenk(rad)winkelmesseinrichtung (130) erfassten Lenkwinkels des Fahrzeugs ändert.

8. Vorrichtung nach Anspruch 6 oder 7, **dadurch gekennzeichnet, dass** die Abstandsmesseinrichtung (140) als Ultraschallsensor ausgebildet ist.
